# EUROPEAN PATENT SPECIFICATION

(11) **EP 2 570 832 B1**
(45) Date of publication and mention of the grant of the patent: **31.08.2016**
(21) Application number: 11181064.4
(22) Date of filing: 13.09.2011
(51) Int. Cl.: G02B 6/44

(54) **Strain relief device for cables and fiber optic distribution device**
Zugentlastungsvorrichtung für Kabel und faseroptische Verteilungsvorrichtung
Dispositif de réduction de tension et dispositif de distribution à fibres optiques

(43) Date of publication of application: 20.03.2013
(73) Proprietor: CCS Technology, Inc., Wilmington, DE 19803 (US)
(72) Inventor: Ruda, Michal, 93-377 Lodz (PL); Karolak, Przemyslaw, 62-812 Jastrzebniki (PL); Fabrykowski, Grzegorz, 95-010 Gmina Strykow (PL)
(74) Representative: Sturm, Christoph

(56) References cited:
- WO-A2-2008/048935
- WO-A2-2008/063054
- US-A1- 2009 304 343
- US-B1- 7 603 020

## Description

The present patent application relates to a strain relief device for cables. In addition the present patent application relates to a fiber optic distribution device.

When building data transmission networks from optical cables, it is necessary to interconnect optical fibers of the cables and to store excess lengths of said optical fibers. The connection points and excess lengths must be handled in fiber optic distribution devices outside of buildings and inside of buildings.

Outside of buildings for so-called outdoor applications, connection points between optical fibers and excess lengths thereof, are typically accommodated in fiber optic distribution devices designed as cable sleeves or street cabinets. Inside of buildings for so-called indoor applications, connection points between optical fibers and excess lengths thereof, are typically accommodated in fiber optic distribution devices designed as distribution cabinets or distribution frames. Fiber optic distribution devices designed as wall boxes can be used both outside of buildings and inside of buildings.

Fiber optic fiber distribution devices designed as wall boxes are known from the product catalogue entitled "Accessories for fiber optic networks, Edition 1, pages 184 to 187, issue 2001, Corning Cable Systems GmbH & Co. KG". The wall boxes disclosed in this product catalogue comprise a housing and optical fiber handling components, specifically splice cassettes and/or patch panels and/or strain relief devices, positioned inside the housing for handling connection points and excess lengths of optical fibers and for providing strain relief for the optical cables.

One of the key issues within fiber optic distribution devices is strain relieving of the optical cables entering the fiber optic distribution device. Commonly, in FTTH (Fiber to The Home) applications, the fiber optic distribution devices are located in vertical shafts in the multi apartment buildings (also known as multiple dwelling units or MDU) on different levels. During past years, the need for increased bandwidth was increasing rapidly, leading to development of optical cables with more and more optical fibers, resulting in the increase of cable weight. Optical cables which are guided in vertical shafts are not always additionally secured to the wall of the vertical shaft, hence the strain relief inside the fiber optic distribution device must be strong enough to resist the forces coming from the cable weight itself. Accidental pulling of the optical cables below the level where the fiber optic distribution device is installed is also a situation that should be covered by the strain relief inside the fiber optic distribution device.

WO 2008/048935 A2 discloses a strain relief device according to the preamble of claim 1.

Other prior art is disclosed by WO 2008/063054 A2 and US 7 603 020 B1.

The present application is based on addressing the problem of providing a novel strain relief device for cables for use in fiber optic distribution devices being suitable for a variety of different cable diameters and reliable and, at the same time, being reliable as well as providing a novel fiber optic distribution device.

The strain relief device according to the present patent application is defined in claim 1.

The novel strain relief device allows a quick and easy operation. The novel strain relief device allows an installation and handling of cables outside the fiber optic distribution device, hence the size of fiber optic distribution device is in terms of installation and handling not a limitation. The novel strain relief device does in a certain range of cable diameters not depend on the actual cable diameter and can be used for a variety of different cable diameters. There is no need to take any measurements to establish the proper length of the strengthening elements of the cable. No additional tools are needed for installation. The novel strain relief device is a separate component and can therefore be used for different applications.

The fiber optic distribution device according to the present patent application comprises a housing and at least one strain relief device according to the present patent application.

Preferred embodiments of the strain relief device are given in the dependent claims and the description below. Exemplary embodiments will be explained in more detail with reference to the drawing, in which:
- figure 1: shows a perspective view of a strain relief device for cables in an opened installation state of the same;
- figure 2: shows a perspective view of a strain relief device of figure 1 in an opened installation state of the same together with strengthening members of a cable to be strain relieved;
- figure 3: shows a perspective view of a strain relief device of figure 1 in a closed operation state of the same together with strengthening members of a cable to be strain relieved;
- figure 4: shows a perspective view of a strain relief device of figure 1 in a closed operation state of the same together with strengthening members of a cable to be strain relieved; and
- figure 5: shows a detail of a fiber optic distribution device comprising a strain relief device as shown in figures 1 to 4.

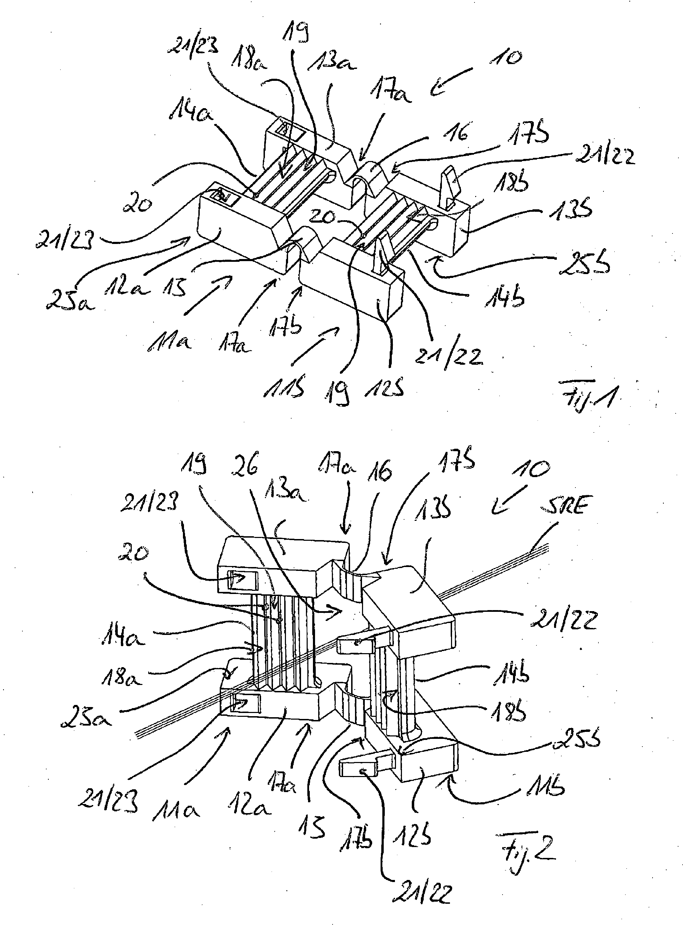

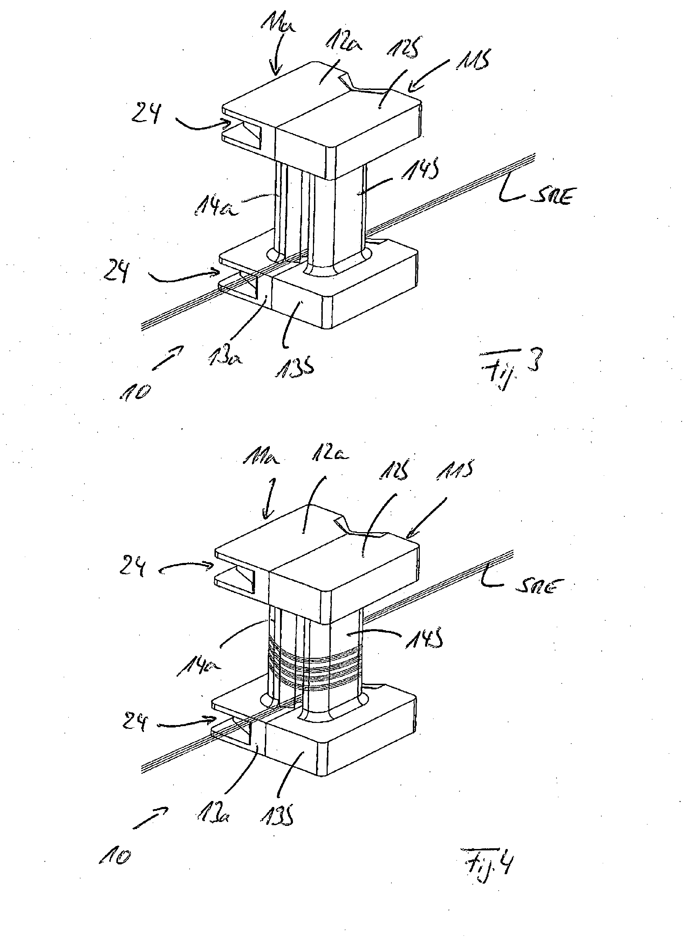

The present patent application relates to a strain relief device 10 for cables. Figures 1 to 2 show the strain relief device 10 in an opened installation state and figures 3 to 4 show the strain relief device 10 in a closed operation state of the same.

The strain relief device 10 comprises a first basic body 11 a having opposite end segments 12a, 13a and a middle segment 14a extending between the opposite end segments 12a and 13a. The strain relief device 10 further comprises a second basic body 11 b having opposite end segments 12b, 13b and a middle segment 14b extending between the opposite end segments 12a and 13b.

The first basic body 11 a and the second basic body 11 b are hinged together by hinges 15, 16 joining up the end segments 12a, 13a of the first basic body 11 a with respective adjacent end segments 12b, 13b of the second basic body 11b thereby allowing to pivot the basic bodies 11 a, 11 b with respect to each other in order to transfer the strain relief device 10 between the opened installation state (see figures 1 and 2) and the closed operation state (see figures 3 and 4).

The hinges 15, 16 for hinging together the first basic body 11 a and the second basic 11 b extend between first sides 17a, 17b of the end segments 12a, 13a of the first basic body 11 a and the end segments 12b, 13b of the second basic body 11 b, respectively.

The middle segments 14a, 14b of the first basic body 11 a and the second basic body 11 b have profiled surfaces 18a, 18b being adjoined to each other in the closed operation state of the strain relief device 10 (see figures 3 and 4) and clamping strengthening elements SRE of at least one cable to be strain relieved there between in the closed operation state of the strain relief device 10.

The strengthening elements SRE of the at least one cable may be aramid yarn or the like.

The profiled surfaces 18a, 18b of the middle segments 14a, 14b of the first basic body 11 a and the second basic body 11 b each comprise recesses 19 and protrusions 20 engaging in the closed operation state of the strain relief device.

In the closed operation state of the strain relief device, the protrusions 20 of the profiled surface 18a insert into the recesses 19 of the profiled surface 18b and the protrusions 20 of the profiled surface 18b insert into the recesses 19 of the profiled surface 18a. The strengthening elements SRE of at least one cable to be strain relieved are thereby clamped and fixed between the profiled surfaces 18a and 18b of the middle segments 14a, 14b.

In the closed operation state of the strain relief device (see figures 3 and 4) the first basic body 11 a and the second basic body 11 b of the strain relief device 10 are locked to each other by fastening means 21. The fastening means 21 comprise at least one barb-like anchoring element 22 located on at least one end segment 12b, 13b of at least one of the basic bodies 11 b, the or each anchoring element 22 snapping into a recess 23 located on the end segment 12a, 13a of the respective other basic body 11 a in the closed operation state of the strain relief device 10.

In the shown embodiment, each end segment 12b and 13b of the basic body 11 b comprises one barb-like anchoring element 22 and each end segment 12a and 13a of the basic body 11 a comprises one recess 23.

The recesses 23 receiving the barb-like anchoring elements 22 in the closed operation state of the strain relief device 10 comprise an opening 24 (see figures 3 and 4) for releasing the snap-fit connection between the respective recess 23 and the respective anchoring element 22. A tool like a screw driver can be inserted into such an opening 24 for releasing the respective snap-fit connection.

The fastening means 21 comprising the recesses 23 and the barb-like anchoring elements 22 are located on second sides 25a, 25b of the end segments 12a, 13a of the first basic body 11 a and the end segments 12b, 13b of the the second basic body 11 b, respectively.

The strain relief device 10 has in the closed operation state a columnar shape, whereby the end segments 12a, 12b, 13a, 13b provide the column capitals of the columnar shaped strain relief device 10, and whereby the middle segments 14a, 14b provide the columns shaft of the columnar shaped strain relief device 10.

In the closed operation state of the strain relief device 10 the end segments 12a, 12b, 13a, 13b protrude in all directions with respect to the middle segments 14a, 14b.

For installing at least one cable to be strain relived at the strain relief device 10, the strain relief device 10 is in its opened installation state and the strengthening elements SRE of the or each cable are fed though (see figure 2) an opening 26 defined by the hinges 15, 16 and the middle segments 14a, 14b in the opened installation state of the strain relief device 10.

Afterwards, the strain relief device 10 is transferred into its closed operation state (see figure 3) thereby clamping the strengthening elements SRE of the or each cable between the structured surfaces 18a, 18b of the middle segments 14a, 14b.

Afterwards, the strengthening elements SRE can be wrapped around the middle segments 14a, 14b (see figure 4) several times. This installation can be made outside a fiber optic distribution device and after this installation the strain relief device 10 can be positioned or installed in a fiber optic distribution device.

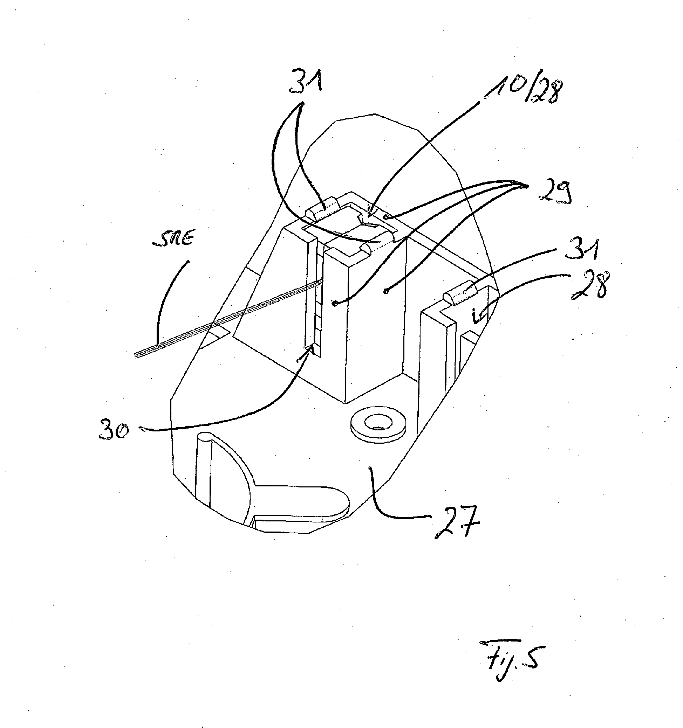

Figure 5 shows a detail of a fiber optic distribution device 27 comprising sections 28 for receiving the strain relief device 10. The sections 28 for receiving the strain relief device 10 are defined by walls 29, whereby at last one of the walls 29 comprises an opening 30 for receiving the strengthening elements SRE clamped in the strain relief device 10.

Barb-like anchoring elements 31 on opposite walls 29 of the sections 28 hold the respective strain relief device 10 within the respective section 28 by means of a snap-fit connection when the respective strain relief device 10 is inserted into the respective section 28 of the fiber optic distribution device 27.

### List of reference numerals

- 10: strain relief device
- 11a: basic body
- 11b: basic body
- 12a: end segment
- 12b: end segment
- 13a: end segment
- 13b: end segment
- 14a: middle segment
- 14b: middle segment
- 15: hinge
- 16: hinge
- 17a: first side
- 17b: first side
- 18a: profiled surface
- 18b: profiled surface
- 19: recess
- 20: protrusion
- 21: fastening element
- 22: barb-like anchoring element
- 23: recess
- 24: opening
- 25a: second side
- 25b: second side
- 26: opening
- 27: fiber optic distribution device
- 28: section
- 29: wall
- 30: opening
- 31: barb-like anchoring element

## Claims

1. Strain relief device (10) for at least one cable having strengthening elements,
comprising a first basic body (11a) having opposite end segments (12a, 13a) and a middle segment (14a) extending between the opposite end segments (12a, 13a);
further comprising a second basic body (11 b) having opposite end segments (12b, 13b) and a middle segment (14b) extending between the opposite end segments (12b, 13b);
whereby the first basic body (11 a) and the second basic body (11 b) are hinged together by hinges (15, 16) joining up the end segments (12a, 13a) of the first basic body (11 a) with adjacent end segments (12b, 13b) of the second basic body (11 b) thereby allowing the basic bodies (11 a, 11 b) to pivot with respect to each other in order to transfer the strain relief device (10) between an opened installation state and a closed operation state;
**characterized in that**
an opening (26) is defined by the hinges (15, 16) and the middle segments (14a, 14b) in the opened installation state of the strain relief device (10), wherein for installing the at least one cable to be strain relieved at the strain relief device (10) the strengthening elements (SRE) of the at least one cable are fed though the opening (26);
whereby the middle segments (14a, 14b) of the first basic body (11 a) and the second basic body (11 b) have profiled surfaces (18a, 18b) being adjoined to each other in the closed operation state of the strain relief device (10) and clamping the strengthening elements (SRE) of at least one cable which have been fed though the opening (26) in opened installation state of the strain relief device (10) there between in the closed operation state of the strain relief device (10).

2. Strain relief device as claimed in claim 1, **characterised in that** the profiled surfaces (18a, 18b) of the middle segments (14a, 14b) of the first basic body (11 a) and the second basic body (11 b) each comprise recesses (19) and protrusions (20) engaging in the closed operation state of the strain relief device (10).

3. Strain relief device as claimed in claim 1 or 2, **characterised in that** the hinges (15, 16) for hinging together the first basic body (11 a) and the second basic body (11 b) extend from first sides (17a, 17b) of the end segments (12a, 13a) of the first basic body (11 a) and the end segments (12b, 13b) of the second basic body (11 b), respectively.

4. Strain relief device as claimed in any of claims 1-3, **characterised in that** the first basic body (11 a) and the second basic body (11 b) are locked to each other by fastening means (21) in the closed operation state of the strain relief device (10).

5. Strain relief device as claimed in claim 4, **characterised in that** fastening means (21) are located on second sides (25a, 25b) of the end segments (12a, 13a) of the first basic body (11 a) and the end segments (12b, 13b) of the second basic body (11 b), respectively.

6. Strain relief device as claimed in claim 4 or 5, **characterised in that** the fastening means (21) comprise at least one barb-like anchoring element (22) located on at least one end segment (12b, 13b) of at least one of the basic bodies (11 b), the or each anchoring element (22) snapping into a recess (23) located on the end segment (12a, 13a) of the respective other basic body (11 a) in the closed operation state of the strain relief device (10).

7. Strain relief device as claimed in claim 6, **characterised in that** the or each recess (23) receiving a barb-like anchoring element (22) in the closed operation state of the strain relief device comprises an opening (24) for releasing the snap fit connection between the respective recess (23) and the respective anchoring element (22).

8. Strain relief device as claimed in any of claims 1-7, **characterised in that** the strain relief device has a columnar shape in the closed operation state, whereby the end segments (12a, 12b, 13a, 13b) provide the column capitals and the middle segments (14a, 14b) provide the columns shaft of the columnar shaped strain relief device.

9. Strain relief device as claimed in any of claims 1-8, **characterised in that** in the closed operation state of the strain relief device the end segments (12a, 12b, 13a, 13b) protrude in all directions with respect to the middle segments (14a, 14b).

10. Fiber optic distribution device, comprising a housing and optical fiber handling components, specifically splice cassettes and/or patch panels and/or strain relief devices, positioned inside the housing for handling connection points and excess lengths of optical fibers, **characterised by** at least one strain relief device (10) as claimed in any of claims 1-9.

## Patentansprüche

1. Zugentlastungsvorrichtung (10) für mindestens ein Kabel, das Verstärkungselemente aufweist,
umfassend einen ersten Grundkörper (11a), der gegenüberliegende Endsegmente (12a, 13a) und ein Mittelsegment (14a), das sich zwischen den gegenüberliegenden Endsegmenten (12a, 13a) erstreckt, aufweist;
ferner umfassend einen zweiten Grundkörper (11b), der gegenüberliegende Endsegmente (12b, 13b) und ein Mittelsegment (14b), das sich zwischen den gegenüberliegenden Endsegmenten (12b, 13b) erstreckt, aufweist;
wobei der erste Grundkörper (11a) und der zweite Grundkörper (11b) durch Gelenke (15, 16) miteinander verbunden sind, welche die Endsegmente (12a, 13a) des ersten Grundkörpers (11a) mit angrenzenden Endsegmenten (12b, 13b) des zweiten Grundkörpers (11b) verbinden, wodurch die Grundkörper (11a, 11b) in Bezug aufeinander schwenken können, um die Zugentlastungsvorrichtung (10) zwischen einem offenen Installationszustand und einem geschlossenen Betriebszustand zu überführen;
**dadurch gekennzeichnet, dass**
eine Öffnung (26) durch die Gelenke (15, 16) und die Mittelsegmente (14a, 14b) im geöffneten Installationszustand der Zugentlastungsvorrichtung (10) definiert wird, wobei zum Installieren des mindestens einen Kabels, das an der Zugenlastungsvorrichtung (10) zugentlastet werden soll, die Verstärkungselemente (SRE) des mindestens einen Kabels durch die Öffnung (26) geführt werden;
wobei die Mittelsegmente (14a, 14b) des ersten Grundkörpers (11a) und des zweiten Grundkörpers (11b) profilierte Oberflächen (18a, 18b) aufweisen, die im geschlossenen Betriebszustand der Zugentlastungsvorrichtung (10) aneinander angrenzen und die Verstärkungselemente (SRE) des mindestens einen Kabels, die durch die Öffnung (26) im offenen Installationszustand der Zugentlastungsvorrichtung (10) geführt wurden, im geschlossenen Betriebszustand der Zugentlastungsvorrichtung (10) klemmen.

2. Zugentlastungsvorrichtung nach Anspruch 1, **dadurch gekennzeichnet, dass** die profilierten Oberflächen (18a, 18b) der Mittelsegmente (14a, 14b) des ersten Grundkörpers (11a) und des zweiten Grundkörpers (11b) jeweils Ausnehmungen (19) und Vorsprünge (20) aufweisen, die im geschlossenen Betriebszustand der Zugentlastungsvorrichtung (10) in Eingriff stehen.

3. Zugentlastungsvorrichtung nach Anspruch 1 oder 2, **dadurch gekennzeichnet, dass** die Gelenke (15, 16) zum Anlenken des ersten Grundkörpers (11a) und des zweiten Grundkörpers (11b) sich jeweils von ersten Seiten (17a, 17b) der Endsegmente (12a, 13a) des ersten Grundkörpers (11a) bzw. der Endsegmente (12b, 13b) des zweiten Grundkörpers (11b) erstrecken.

4. Zugentlastungsvorrichtung nach einem der Ansprüche 1 bis 3, **dadurch gekennzeichnet, dass** der erste Grundkörper (11a) und der zweite Grundkörper (11b) über Befestigungsmittel (21) im geschlossenen Betriebszustand der Zugentlastungsvorrichtung (10) miteinander verriegelt sind.

5. Zugentlastungsvorrichtung nach Anspruch 4, **dadurch gekennzeichnet, dass** die Befestigungsmittel (21) an zweiten Seiten (25a, 25b) der Endsegmente (12a, 13a) des ersten Grundkörpers (11a) bzw. der Endsegmente (12b, 13b) des zweiten Grundkörpers (11b) angeordnet sind.

6. Zugentlastungsvorrichtung nach Anspruch 4 oder 5, **dadurch gekennzeichnet, dass** die Befestigungsmittel (21) mindestens ein Widerhaken-Verankerungselement (22) umfassen, das an mindestens einem Endsegment (12b, 13b) mindestens eines der Grundkörper (11b) angeordnet ist, wobei das oder jedes Verankerungselement (22) im geschlossenen Betriebszustand der Zugentlastungsvorrichtung (10) in eine Ausnehmung (23) schnappt, die an einem Endsegment (12a, 13a) des jeweils anderen Grundkörpers (11a) angeordnet ist.

7. Zugentlastungsvorrichtung nach Anspruch 6, **dadurch gekennzeichnet, dass** die oder jede Ausnehmung (23), die ein Widerhaken-Verankerungselement (22) im geschlossenen Betriebszustand der Zugentlastungsvorrichtung aufnimmt, eine Öffnung (24) zum Lösen der Schnappverbindung zwischen der zugehörigen Ausnehmung (23) und dem zugehörigen Verankerungselement (22) umfasst.

8. Zugentlastungsvorrichtung nach einem der Ansprüche 1 bis 7, **dadurch gekennzeichnet, dass** die Zugentlastungsvorrichtung eine säulenartige Form im geschlossenen Betriebszustand aufweist, wobei die Endsegmente (12a, 12b, 13a, 13b) die Säulenkapitelle bereitstellen und die Mittelsegmente (14a, 14b) den Säulenschaft der säulenförmigen Zugentlastungsvorrichtung bereitstellen.

9. Zugentlastungsvorrichtung nach einem der Ansprüche 1 bis 8, **dadurch gekennzeichnet, dass** im geschlossenen Betriebszustand der Zugentlastungsvorrichtung die Endsegmente (12a, 12b, 13a, 13b) in alle Richtungen bezüglich der Mittelsegmente (14a, 14b) vorstehen.

10. Faseroptische Verteilungsvorrichtung, umfassend ein Gehäuse und Glasfaser-Handhabungskomponenten, insbesondere Spleißkassetten und/oder Steckfelder und/oder Zugentlastungsvorrichtungen, die innerhalb des Gehäuses angeordnet sind, um die Verbindungspunkte und überschüssigen Glasfaserlängen handzuhaben, **gekennzeichnet durch** mindestens eine Zugentlastungsvorrichtung (10) nach einem der Ansprüche 1 bis 9.

## Revendications

1. Dispositif de réduction de tension (10) pour au moins un câble comprenant des éléments de renforcement,
comprenant un premier corps de base (11a) présentant des segments d'extrémité opposés (12a, 13a) et un segment intermédiaire (14a) qui s'étend entre les segments d'extrémité opposés (12a, 13a);
comprenant en outre un second corps de base (11b) présentant des segments d'extrémité opposés (12b, 13b) et un segment intermédiaire (14b) qui s'étend entre les segments d'extrémité opposés (12b, 13b);
dans lequel le premier corps de base (11a) et le second corps de base (11b) sont articulés l'un avec l'autre par des charnières (15, 16) qui joignent les segments d'extrémité (12a, 13a) du premier corps de base (11a) avec des segments d'extrémité (12b, 13b) du second corps de base (11b), permettant de ce fait aux corps de base (11a, 11b) de pivoter l'un par rapport à l'autre dans le but de transférer le dispositif de réduction de tension (10) entre un état d'installation ouvert et un état de fonctionnement fermé;
**caractérisé en ce que**:
une ouverture (26) est définie par les charnières (15, 16) et les segments intermédiaires (14a, 14b) dans l'état d'installation ouvert du dispositif de réduction de tension (10), dans lequel pour installer ledit au moins un câble dont la tension doit être réduite au dispositif de réduction de tension (10), les éléments de renforcement (SRE) dudit au moins un câble sont amenés à travers l'ouverture (26);
dans lequel les segments intermédiaires (14a, 14b) du premier corps de base (11a) et du second corps de base (11b) présentent des surfaces profilées (18a, 18b) qui sont contiguës l'une à l'autre dans l'état de fonctionnement fermé du dispositif de réduction de tension (10) et qui serrent entre elles dans l'état de fonctionnement fermé du dispositif de réduction de tension (10) les éléments de renforcement (SRE) d'au moins un câble qui ont été amenés à travers l'ouverture (26) dans l'état d'installation ouvert du dispositif de réduction de tension (10).

2. Dispositif de réduction de tension selon la revendication 1, **caractérisé en ce que** les surfaces profilées (18a, 18b) des segments intermédiaires (14a, 14b) du premier corps de base (11a) et du second corps de base (11b) comportent chacune des évidements (19) et des protubérances (20) qui s'engagent dans l'état de fonctionnement fermé du dispositif de réduction de tension (10).

3. Dispositif de réduction de tension selon la revendication 1 ou 2, **caractérisé en ce que** les charnières (15, 16) pour articuler l'un avec l'autre le premier corps de base (11a) et le second corps de base (11b) s'étendent à partir de premiers côtés (17a, 17b) des segments d'extrémité (12a, 13a) du premier corps de base (11a) et des segments d'extrémité (12b, 13b) du second corps de base (11b), respectivement.

4. Dispositif de réduction de tension selon l'une quelconque des revendications 1 à 3, **caractérisé en ce que** le premier corps de base (11a) et le second corps de base (11b) sont verrouillés l'un à l'autre par des moyens de fixation (21) dans l'état de fonctionnement fermé du dispositif de réduction de tension (10).

5. Dispositif de réduction de tension selon la revendication 4, **caractérisé en ce que** les moyens de fixation (21) sont situés sur des seconds côtés (25a, 25b) des segments d'extrémité (12a, 13a) du premier corps de base (11a) et des segments d'extrémité (12b, 13b) du second corps de base (11b), respectivement.

6. Dispositif de réduction de tension selon la revendication 4 ou 5, **caractérisé en ce que** les moyens de fixation (21) comprennent au moins un élément d'ancrage en forme de barbe (22) qui est situé sur au moins un segment d'extrémité (12b, 13b) d'au moins un premier des corps de base (11b), ledit ou chaque élément d'ancrage (22) s'emboîtant dans un évidement (23) situé sur le segment d'extrémité (12a, 13a) de l'autre corps de base respectif (11a) dans l'état de fonctionnement fermé du dispositif de réduction de tension (10).

7. Dispositif de réduction de tension selon la revendication 6, **caractérisé en ce que** ledit ou chaque évidement (23) qui reçoit un élément d'ancrage en forme de barbe (22) dans l'état de fonctionnement fermé du dispositif de réduction de tension comporte une ouverture (24) pour libérer la connexion ajustée serrée entre l'évidement respectif (23) et l'élément d'ancrage respectif (22).

8. Dispositif de réduction de tension selon l'une quelconque des revendications 1 à 7, **caractérisé en ce que** le dispositif de réduction de tension présente une forme colonnaire dans l'état de fonctionnement fermé, moyennant quoi les segments d'extrémité (12a, 12b, 13a, 13b) forment des chapiteaux de colonne et les segments intermédiaires (14a, 14b) forment les fûts de colonne du dispositif de réduction de tension de forme colonnaire.

9. Dispositif de réduction de tension selon l'une quelconque des revendications 1 à 8, **caractérisé en ce que** dans l'état de fonctionnement fermé du dispositif de réduction de tension, les segments d'extrémité (12a, 12b, 13a, 13b) font saillie dans toutes les directions par rapport aux segments intermédiaires (14a, 14b).

10. Dispositif de distribution à fibres optiques, comprenant un boîtier et des composants de manipulation de fibres optiques, spécifiquement des cassettes d'épissures et/ou des tableaux de raccordement et/ou des dispositifs de réduction de tension, positionnés à l'intérieur du boîtier afin de gérer des points de connexion et des longueurs excessives de fibres optiques, **caractérisé par** au moins un dispositif de réduction de tension (10) selon l'une quelconque des revendications 1 à 9.
